# EUROPÄISCHE PATENTSCHRIFT

(11) **EP 2 865 573 B1**
(45) Veröffentlichungstag und Bekanntmachung des Hinweises auf die Patenterteilung: **14.12.2016**
(21) Anmeldenummer: 14187496.6
(22) Anmeldetag: 02.10.2014
(51) Int. Cl.: B60T 8/34, B60T 17/18

(54) **Kraftfahrzeug mit redundanten Bremsdruckregelvorrichtungen**
Motor vehicle with redundant brake pressure control devices
Véhicule automobile avec des dispositifs de commande de pression de freinage redondants

(30) Priorität: 24.10.2013 DE 102013017688
(43) Veröffentlichungstag der Anmeldung: 29.04.2015
(73) Patentinhaber: AUDI AG, 85045 Ingolstadt (DE)
(72) Erfinder: Brok, Tobias, 85092 Kösching (DE); Stemmer, Martin, 85445 Niederding (DE)

(56) Entgegenhaltungen:
- EP-A2- 0 736 431
- EP-A2- 1 396 403
- WO-A1-01/25068
- DE-A1- 10 036 286
- DE-A1- 19 508 559
- DE-A1-102010 003 237

## Beschreibung

Die Erfindung betrifft ein Kraftfahrzeug, umfassend mehrere Räder mit jeweils wenigstens einer zugeordneten, hydraulisch betätigbaren Bremse, zwei separate hydraulische Bremskreise, über die die Bremsen betätigbar sind, wobei beide Bremskreise über einen gemeinsamen Bremskraftverstärker bedienbar und über eine dem Bremskraftverstärker nachgeschaltete Ventileinheit separat zuschaltbar sind, wobei in beiden Bremskreisen eine Ventilbaugruppe mit zugeordneter Steuerungseinrichtung vorgesehen ist, umfassend eine Mehrzahl an separat über die Steuerungseinrichtung steuerbaren Ventilen zur Modulation des Bremsdrucks innerhalb des Bremskreises.

Kraftfahrzeuge verfügen seit langem über zwei separate hydraulische Bremskreise, über die die einzelnen Radbremsen, üblicherweise Scheibenbremsen, separat betätigbar sind. Wenn der ersten Bremskreis ausfällt, kann durch den zweiten Kreis eine Bremsfunktion mit reduzierter Verzögerung dargestellt werden (fail safe).

Moderne Kraftfahrzeuge verfügen des Weiteren über eine im ersten und zweiten Bremskreis integrierte Ventilbaugruppe mit einer zugeordneten Steuerungseinrichtung. Diese Ventilbaugruppe dient der Modulation des Bremsdrucks innerhalb des ersten und zweiten Bremskreises, um die einzelnen Bremsen individuell hydraulisch anzusteuern, also den jeweiligen Bremsdruck, der einer Bremse gegeben wird, individuelle zu variieren. Auf diese Weise ist es möglich, eine Reihe von Assistenzfunktionen abzubilden, die die Fahrt grundsätzlich sicherer gestalten respektive den Fahrer in bestimmten Fahrsituationen unterstützen. Hierüber können also die Bremsen und damit auch die Räder separat angesteuert respektive gebremst werden, um beispielsweise eine Schlupfregelung zu realisieren, ein Antiblockiersystem abzubilden, oder um eine Lenkwirkung zu erzeugen, indem durch entsprechende Bremsdruckmodulation beispielsweise die Bremsen einer Seite stärker betätigt werden, als die der anderen, um so ein gewisses Giermoment zu erzeugen und das Fahrzeug in einem gewissen Umfang querzuführen. Ein solches System, also Ventilbaugruppe mit zugeordneter Steuerungseinrichtung, wird üblicherweise ESC (electronic stability control) oder ESP (elektronisches Stabilitätsprogramm) genannt und beschreibt die Fahrdynamikregelung respektive ein elektronisch gesteuertes Fahrerassistenzsystem.

Die Bremsdruckvariation innerhalb des ersten und zweiten Bremskreises über die Ventilbaugruppe mit ihrer Steuerungseinrichtung erfolgt dadurch, dass über eine ventilbaugruppenseitig vorgesehenen Motor mit zugeordneten Pumpen sowie durch entsprechende Ansteuerung der elektromagnetischen Ventile über die Steuerungseinrichtung der Hydraulikfluidfluss zu den einzelnen Bremsen gesteuert und der Hydraulikdruck entsprechend variiert wird. Auf diese Weise ist es sehr schnell möglich, etwaige Druckvariationen und damit Reaktionen an den einzelnen Bremsen respektive Rädern hervorzurufen.

Kommt es im ersten Bremskreis zu einer Funktionsstörung, beispielsweise weil ein Bremsschlauch platzt, steht im zweiten Bremskreis nun zumindest eine entsprechende Bremsfunktion zur Verfügung. Da der Fahrer in die Führung des Fahrzeugs voll eingebunden ist, ist es für ihn nur unter Verwendung des zweiten Bremskreises ohne weiteres möglich, das Fahrzeug auch weiterhin sicher zu führen und insbesondere sicher zu bremsen und abzustellen. Diese Rückfallfunktion wird üblicherweise auch "fail safe" genannt.

Moderne Kraftfahrzeuge lassen bereits jetzt ein teilautonomes Fahren zu, also ein Fahren, bei dem der Fahrer zumindest zum Teil nicht mehr in die Fahrzeugführung eingebunden ist. Die Entwicklung geht dabei immer stärker in eine den Fahrer möglichst weitgehend entlastende Richtung hin zu einem pilotierten respektive weitgehend autonomen Fahren. Das heißt, dass das Fahrzeug respektive die entsprechende Steuerung selbsttätig in der Lage ist, das Fahrzeug längs- und querzuführen, ohne dass hierfür der Fahrer eingebunden ist. Dieser kann sich anderen Dingen widmen. Mit zunehmendem Umfang des pilotierten Fahrens steigen aber auch die Anforderungen an sicherheitsrelevante Fahrzeugsysteme, die dann nicht mehr "fails safe" ausgelegt werden müssen, sondern "fail operational", denn sie müssen in der Lage sein, zumindest für eine gewisse Überbrückungszeit, nämlich bis der Fahrer selbst wieder aktiv in den Fahrbetrieb eingebunden ist, das Fahrzeug autonom zu führen, selbst wenn ein Störfall gegeben ist. Das heißt, dass die "fail operational"-Regelung so ausgestaltet werden muss, als wenn der Fahrer noch in vollem Umfang aktiv eingebunden wäre. Bisher bekannte Bremssystemarchitekturen jedoch lassen die Darstellung eines solchen "fail operational"-Verhaltens nicht zu.

Die DE 10 2010 003 237 A1 offenbart eine Fahrzeugbremsanlage mit einer Mehrzahl hydraulischer Bremskreise, über die Radbremseinheiten mit Bremsdruck zu versorgen sind, wobei den Bremskreisen eine ansteuerbare Pumpeneinrichtung zugeordnet ist. Dabei ist vorgesehen, dass mindestens eine Radbremseinheit an mindestens zwei Bremskreise angeschlossen und über diese zwei Bremskreise mit Bremsdruck zu versorgen ist.

Aus der DE 195 08 559 A1 ist ferner eine schlupfgeregelte Bremsanlage mit einer hydraulischen Übertragungseinrichtung für Nutzfahrzeuge mit wenigstens zwei Achsen bekannt. Jeder Achse des Fahrzeugs ist ein Hydroaggregat mit einem elektrischen Steuergerät zugeordnet, welches vier hydraulische Kanäle aufweist. Einen Hauptzylinder mit Radzylindern verbindende Bremsleitungen sind über je zwei parallelgeschaltete Kanäle des Hydroaggregats geführt. An das entsprechende Steuergerät sind zwei den Rädern zugeordnete Raddrehfühler angeschlossen, wobei die Steuergeräte zum Austausch von Raddrehfühlersignalen elektrisch verbunden sind.

Der Erfindung liegt damit das Problem zugrunde, ein Kraftfahrzeug anzugeben, das bei einfach konzipierter Auslegung des Bremssystems einen "fail operational"-Betrieb zulässt.

Zur Lösung dieses Problems ist bei einem Kraftfahrzeug der eingangs genannten Art erfindungsgemäß vorgesehen, dass parallel zu dem ersten und dem zweiten Bremskreis ein dritter und ein vierter Bremskreis vorgesehen ist, wobei im dritten und vierten Bremskreis eine weitere, identische Ventilbaugruppe mit zugeordneter Steuerungseinrichtung vorgesehen ist, wobei bei einer die Funktionstüchtigkeit des ersten und/oder zweiten Bremskreises beeinträchtigenden erfassten Störung über die elektrisch steuerbare Ventileinheit die Ventilbaugruppe mit Steuerungseinrichtung des dritten und vierten Bremskreises zuschaltbar ist.

Die je vier Radbremsanschlüsse des ersten und zweiten Ventilblocks werden den ersten und zweiten Ventilbaugruppen (funktional/hydraulisch) nachgelagert wieder zu vier Radbremsanschlüssen zusammengeführt.

Erfindungsgemäß sind vier Bremskreise vorgesehen, wobei im dritten und vierten Bremskreis eine identische Ventilbaugruppe mit zugeordneter Steuerungseinrichtung integriert, also eine weitere ESC (electronic stability control), wie sie auch in dem ersten und zweiten Bremskreis vorgesehen ist. Diese ist von der ersten Ventilbaugruppe nebst Steuerungseinrichtung komplett getrennt, sowohl hydraulisch als auch elektrisch. Das heißt, dass der dritten und vierten Bremskreis letztlich identisch zum ersten Bremskreis ausgelegt und funktionstüchtig ist. Wird nun eine wie auch immer geartete Störung erfasst, die zu einer Beeinträchtigung der Funktionstüchtigkeit des ersten und/oder zweiten Bremskreises führt, beispielsweise der Ausfall eines Druckerzeugers, der Ausfall eines Steuergeräts, der Ausfall eines oder mehrerer Ventile oder ein allgemeiner Stromausfall im Bordnetz respektive Stromkreis, in den insbesondere die Ventilbaugruppe mit Steuerungseinrichtung eingebunden ist, so kann über die entsprechend elektrisch steuerbare Ventileinheit unmittelbar die Ventilbaugruppe des dritten und vierten Bremskreises mit ihrer Steuerungseinrichtung zugeschaltet werden. Das heißt, dass nicht nur hydraulisch auf den dritten und vierten Bremskreis zugeschaltet wird, sondern quasi auch elektrisch und steuerungstechnisch. Die Ventilbaugruppe und Steuerungseinrichtung des dritten und vierten Bremskreises ist unmittelbar mit dem Umschalten aktiv, insbesondere befindet sich die Steuerungseinrichtung grundsätzlich mit Beginn einer Fahrt bereits in einer stand-by-Modus, so dass im Umschaltfall vermieden wird, dass die Steuerungseinrichtung erst booten muss.

Mit dem Umschalten stehen folglich sämtliche Funktionalitäten des dritten und vierten Bremskreises zur Verfügung, die sich letztlich von denen des ersten und zweiten Bremskreises nicht unterscheiden. Die integrierte Ventilbaugruppe mit ihrer Steuerungseinrichtung ermöglicht in gleicher Weise ein pilotiertes bzw. teilautonomes Fahren, so dass die weitere Fahrzeugführung in gleicher Weise erfolgen kann, wie vor dem Umschalten. Es steht letztlich die volle Brems- und eine eingeschränkte Lenkperformance zur Verfügung. Das Fahrzeug kann also autonom insbesondere die Zeit, die vom Erfassen einer Fehlfunktion bis zur nachfolgenden Übernahme durch den Fahrer, die in einem solchen Fall natürlich angestrebt wird, entsprechend überbrücken, sämtliche Brems- und Lenkfunktionen, die über das Bremssystem auch bisher erwirkbar waren, stehen zur Verfügung. Der Fahrer erhält selbstverständlich eine Übernahmeaufforderung, wenn eine Funktionsstörung erfasst wird. Unabhängig davon, wie schnell nun der Fahrer seiner Übernahmeaufforderung nachkommt, oder ob er dieser nicht folgt, kann die Ventilbaugruppe mit zugeordneter Steuerungseinrichtung im dritten und vierten Bremskreis das Fahrzeug sicher führen und - wenn der Fahrer seiner Übernahmeaufforderung nicht nachkommt - in kurzer Zeit das Fahrzeug insbesondere sicher herunterbremsen und abstellen.

Infolge der hydraulischen und elektrischen Entkopplung führt die im ersten und zweiten Bremskreis festgestellte Funktionsuntüchtigkeit nicht zu einer Beeinträchtigung einer Funktion des zweiten Bremskreises, insbesondere der Ventilbaugruppe respektive der Steuerungseinrichtung. Diese arbeitet völlig autark zur ersten Ventilbaugruppe mit ihrer Steuerungseinrichtung, ein Übergreifen eines Fehlers ist damit ausgeschlossen.

Eines der zentralen Elemente innerhalb des gesamten Bremssystems ist die Ventileinheit, die auf extrem schnelle Art und Weise das Umschalten vom ersten und zweiten auf den dritten und vierten Bremskreis respektive von der ersten Ventilbaugruppe auf die zweite Ventilbaugruppe erwirken soll. Zu diesem Zweck ist die Ventileinheit bevorzugt als elektrisch steuerbares Mehrwegeventil, insbesondere ein 6/2-Wegeventil ausgeführt. Über dieses elektrisch steuerbare Mehrwegeventil, insbesondere das 6/2-Wegeventil, ist es entsprechend möglich, die beiden vom Bremskraftverstärker kommenden Leitungen auf die entsprechenden, zu den beiden Ventilbauteilgruppen führenden Leitungen zu schalten, je nach Schaltstellung der Ventileinheit. Da von dem Bremskraftverstärker üblicherweise zwei Leitungen abgehen und zu jeder Ventilbaugruppe zwei Leitungen führen, ist folglich ein 6/2-Mehrwegeventil ausreichend. Denn dieses stellt sechs Anschlüsse zur Verfügung, so dass zwei Anschlüsse für die vom Bremskraftverstärker kommenden Leitungen gegeben sind und jeweils zwei Anschlüsse für die zu den Ventilbaugruppen führenden Leitungen, bei zwei möglichen Schaltstellungen des Ventils. Dadurch, dass die Ventileinheit elektrisch steuerbar ist, ist eine extrem schnelle Umschaltung möglich.

Dabei ist die Ventileinheit zweckmäßigerweise derart in einen die im ersten und zweiten Bremskreis angeordnete Ventilbaugruppe mit zugeordneter Steuerungseinrichtung versorgenden ersten Stromkreis eingebunden, dass ein in der Ventileinheit vorgesehenes, über diesen Stromkreis versorgtes elektromagnetisches Stellelement einen Ventilschieber in eine erste, die Ventileinheit zur ersten Ventilbauteilgruppe öffnende Stellung gegen die Rückstellkraft eines Federelements bewegt, während bei Stromausfall im ersten Stromkreis das Federelement den Ventilschieber automatisch in eine zweite, die Ventileinheit zur zweiten Ventilbaugruppe öffnende Stellung bewegt. Gemäß dieser Erfindungsausgestaltung befindet sich folglich die Ventileinheit respektive der Ventilschieber bei funktionstüchtigem ersten Bremskreis, wenn dort insbesondere kein Fehler im Stromkreis auftritt, in einer Stellung, in der der erste Bremskreis versorgt wird. Das elektromagnetische Stellelement wird über den funktionstüchtigen Stromkreis entsprechend bestromt, so dass der Ventilschieber gegen die Rückstellkraft eines Federelements in der ersten Position gehalten wird. Das Stellelement ist beispielsweise ein entsprechend ausgelegter Elektromagnet, über den der Ventilschieber gegen die Rückstellkraft des Federelements gezogen oder geschoben wird. Kommt es nun zum Stromausfall, so wird das elektromagnetische Stellelement zwangsläufig nicht mehr bestromt, der Elektromagnet wird entregt. Das Federelement schiebt oder zieht nun zwangsläufig und unmittelbar den Ventilschieber in die zweite Stellung, in der der erste und zweite Bremskreis entkoppelt und der dritte und vierte Bremskreis mit seiner Ventilbaugruppe zugeschaltet wird. Eine separate Bestromung des Stellelements ist hierfür nicht erforderlich, das heißt, dass kein Umschalten auf einen zweiten Stromkreis zum Umschalten der Bremskreise erforderlich ist. Damit ist im Fall eines Stromausfalls eine Zwangsumschaltung realisiert.

Für den Fall, dass eine andersartige Fehlfunktion erfasst wird, beispielsweise ein nicht funktionierendes Ventil in der ersten Ventilbaugruppe oder Ähnliches, ist vorgesehen, dass ein oder das in der Ventileinheit vorgesehene, über den ersten Stromkreis versorgte elektromagnetische Stellelement über die Steuerungseinrichtung der ersten Ventilbaugruppe zum Bewegen eines oder des Ventilschiebers von einer ersten, die Ventileinheit zur ersten Ventilbaugruppe öffnenden Stellung in eine zweite, die Ventileinheit zur zweiten Ventilbaugruppe öffnenden Stellung ansteuerbar ist: In diesem Fall wird also die Umschaltung durch ein entsprechendes Steuersignal der ersten Steuerungseinrichtung erwirkt, wobei dieses Umschaltsignal letztlich nichts anderes erwirkt, als den Elektromagneten stromlos zu schalten, ihn also zu entregen, so dass das bereits beschriebene Federelement den Ventilschieber verschieben kann, sofern ein derart konzipiertes Umschaltventil vorgesehen ist.

Moderne Kraftfahrzeuge verfügen des Weiteren mitunter über eine sogenannte "elektronische Parkbremse". Wenigstens zwei Bremsen sind mit zusätzlichen Elektromotoren versehen, die beim Abstellen des Fahrzeugs und Anwählen der elektronischen Parkbremse die Bremsen durch Bewegen der Bremselemente gegen die Bremsscheibe betätigen. Dies setzt eine entsprechende Ansteuerung der Elektromotoren voraus. Um diese, das Fahrzeug im abgestellten Zustand sichernde, Funktion auch im Störfall, wenn also auf den dritte und vierte Bremskreis umgeschaltet wurde, zu bieten, sieht eine zweckmäßige Weiterbildung der Erfindung vor, dass die Elektromotoren über die jeweils betriebene Steuerungseinrichtung der jeweiligen, über die Ventileinheit zugeschalteten Ventilbaugruppe ansteuerbar sind. Die Zuschaltung der elektrischen Parkbremse ist folglich zu jedem Zeitpunkt gegeben, da dies entweder über die erste oder die zweite Ventilbaugruppe respektive deren Steuerungseinrichtungen erfolgt.

Zweckmäßig ist es in dem Zusammenhang auch, wenn die Elektromotoren über die jeweilige Ventilbaugruppe oder die jeweilige Steuerungseinrichtung bestromt werden. Diese Ausgestaltung stellt folglich Redundanz nicht nur hinsichtlich der Ansteuerung der Elektromotoren, sondern auch ihre grundsätzliche Bestromung zur Verfügung. Ein Stromausfall im ersten Stromkreis, üblicherweise dem Hauptbordnetz, über das üblicherweise auch diese Elektromotoren bestromt werden, wirkt sich folglich hinsichtlich der Funktionalität der Parkbremse nicht negativ aus, denn beim Umschalten auf den zweiten Stromkreis wird die Stromversorgung über den zweiten Stromkreis respektive die zweite Ventilbaugruppe bzw. deren Steuerungseinrichtung übernommen.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipskizze eines erfindungsgemäßen Kraftfahrzeugs,
- Fig. 2: eine Prinzipdarstellung der Bremssystemarchitektur im Regelbetrieb,
- Fig. 3: eine Prinzipdarstellung der Bremssystemarchitektur entsprechend Fig. 2 im Notbetrieb,
- Fig. 4: eine Prinzipdarstellung der Bremssystemarchitektur unter Einbindung einer elektronischen Parkbremsfunktion einer ersten Ausgestaltung und
- Fig. 5: eine Prinzipdarstellung der Bremssystemarchitektur unter Einbindung einer elektronischen Parkbremsfunktion einer zweiten Ausgestaltung.

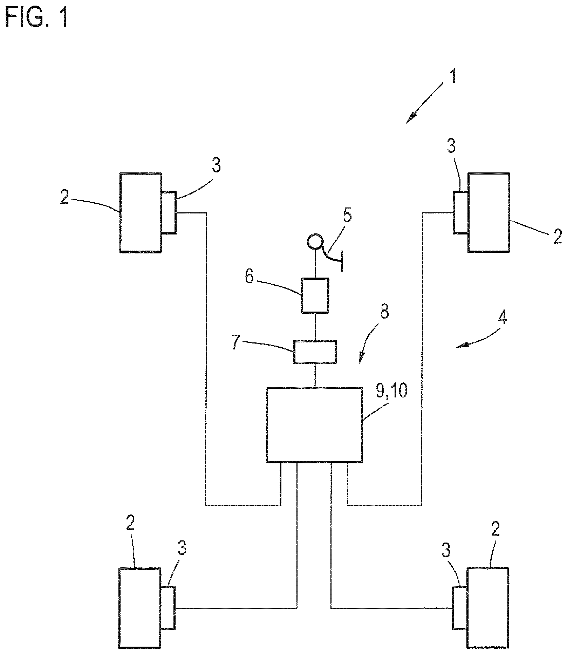

Fig. 1 zeigt eine Prinzipdarstellung eines erfindungsgemäßen Kraftfahrzeugs 1, umfassend vier Räder 2, denen jeweils eine Bremse 3 zugeordnet ist. Die Bremsen sind Teil eines Bremssystems 4, umfassend ein Bremspedal 5, einen diesem nachgeschalteten Bremskraftverstärker 6 sowie eine diesem nachgeschaltete Ventileinheit 7, die derart ausgestaltet ist, zwei separate Bremskreise, die hier nicht näher gezeigt sind, je nach Ventilstellung anzusteuern.

Der Ventileinheit 7 nachgeschaltet ist ein Ventilblock 8, umfassend zwei separate ESC-Blöcke 9, 10, wobei der ESC-Block 9 dem ersten und zweiten Bremskreis und der ESC-Block 10 dem dritten und vierten Bremskreis zugeordnet ist. Jeder ESC-Block besteht aus einer hier nicht näher gezeigten Ventilbaugruppe und einer zugeordneten Steuerungseinrichtung worauf nachfolgend noch eingegangen wird. Über die jeweiligen ESC-Blöcke 9, 10 ist in allen Rad-Bremskreisen eine Modulation des Bremsdrucks möglich, um diesen individuell auf die jeweiligen Bremsen 3 zu verteilen. Die ECS-Blöcke 9, 10 sind über entsprechende Leitungen mit den einzelnen Bremsen 3 verbunden. Über die Variationsmöglichkeit des Bremsdrucks an den einzelnen Bremsen 3 im jeweiligen Bremskreis können die einzelnen Bremsen individuell angesteuert werden, so dass entsprechende, dem Fahrer assistierende Funktionen wie ein Antiblockiersystem, eine Anti-Schlupf-Regelung aber auch Lenkfunktionen durch individuellen Bremseingriff abgebildet respektive realisiert werden können.

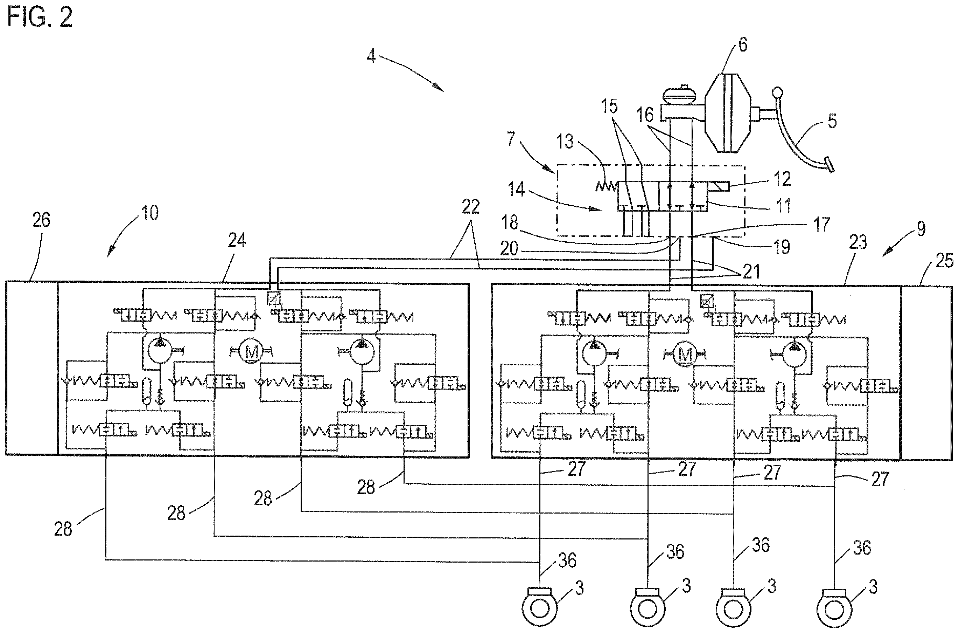

Fig. 2 zeigt eine Prinzipdarstellung des Bremssystems 4. Gezeigt ist das Bremspedal 5, der Bremskraftverstärker 6 und die Ventileinheit 7. Die Ventileinheit 7 umfasst exemplarisch einen Ventilschieber 11, der über ein elektromagnetisches Stellelement 12 in zwei definierte Positionen gebracht werden kann. Der Ventilschieber 11 ist gegen die Rückstellkraft eines Federelements 13 in die in Fig. 2 gezeigte erste Position bewegbar.

Bei der Ventileinheit 7 handelt es sich um ein elektrisch ansteuerbares 6/2-Wegeventil 14, das zwei Eingänge 15, an denen die beiden vom Bremskraftverstärker kommenden Leitungen 16 anliegen, sowie vier Ausgänge 17, 18 und 19, 20, an die die zum ersten ESC-Block 9 laufenden Leitungen 21 oder die zum zweiten ESC-Block 10 laufenden Leitungen 22 angeschlossen sind.

Gezeigt sind ferner die beiden ESC-Blöcke 9, 10, die jeweils eine identische Ventilbaugruppe 23 bzw. 24 sowie eine zugeordnete identische Steuerungseinrichtung 25 bzw. 26 aufweisen. Jede Ventilbaugruppe 23 besteht aus einer Vielzahl separater, elektrisch schaltbarer und separat ansteuerbarer Ventile, die entsprechend miteinander verschaltet sind, um den Bremsdruck, der über die Ventileinheit 7, den Bremskraftverstärker 6 und letztlich das Bremspedal 5 definiert und gegeben wird, zu verteilen respektive zu modulieren. Hierzu ist in jeder Ventilbaugruppe 23, 24 ein entsprechender Motor sowie entsprechende Pumpen integriert, um entsprechende Druckvariationen vorzunehmen. Fig. 2 zeigt exemplarisch eine entsprechende Verschaltungsanordnung innerhalb der jeweiligen Ventilbaugruppen 23, 24.

Von jeder Ventilbaugruppe 23, 24 geht eine entsprechende Leitung 27, 28 zur jeweiligen Bremse 3, wobei die Leitungen 27, 28 an entsprechenden Radanschlüssen zusammengeführt und in einer gemeinsamen Leitung 36 zur Bremse laufen. Über die jeweiligen Ventilbaugruppen 23, 24 ist es möglich, jede Bremse 3 individuell anzusprechen respektive mit Druck zu beaufschlagen, mithin also die Bremskraft individuell zu variieren.

Ersichtlich aus Fig. 2 sind folglich die vier separaten Bremskreise, nämlich der erste und zweite Bremskreis, mit den Anschlüssen 17 und 18 und den daran angeschlossenen Leitungen 21, dem ESC-Block 9 sowie den Leitungen 27. Der dritte und vierte Bremskreis umfasst die Anschlüsse 19 und 20 mit den daran angeschlossenen Leitungen 22, den ESC-Block 10 sowie die Leitungen 28. Die Leitungen 16 werden also über die Ventileinheit 7 in die vier Bremskreise aufgeteilt, wobei je nach Ventilstellung der erste und der zweite Bremskreis (Anschlüsse 17 und 18) oder der dritte und vierte Bremskreis (Anschlüsse 19 und 20) bedient werden.

In der in Fig. 2 gezeigten Stellung des Ventilschiebers 11 ist ausschließlich der erste und zweite Bremskreis zugeschaltet, der dritte und vierte Bremskreis wird nicht angesprochen und ist nicht eingebunden. Ersichtlich sind die Leitungen 16 über die Ventileinheit 7 mit den Leitungen 21 an den Ausgängen 17, 18 verbunden. Die Ventileinheit 7 ist derart in den ersten Stromkreis respektive das Hauptbordnetz eingebunden, dass es im Regelbetrieb, wenn der erste Bremskreis wie in Fig. 2 gezeigt zugeschaltet ist, stets mit Strom aus dem Hauptstromkreis versorgt wird. Das heißt, dass das elektronische Stellelement 12 bestromt wird, sein Elektromagnet drückt den Ventilschieber 11 gegen das Federelement 13 in die in Fig. 2 gezeigte erste Position, in der der erste und zweite Bremskreis zugeschaltet ist.

Wird nun innerhalb des ersten und/oder zweiten Bremskreises eine wie auch immer geartete Funktionsstörung detektiert, so wird automatisch auf den dritten und vierten Bremskreis umgeschaltet. Eine solche Fehlfunktion kann beispielsweise darin liegen, dass in der Ventilbaugruppe 23 ein oder mehrere Ventile nicht funktionieren oder angesteuert werden können, dass die Steuerungseinrichtung 25 eine Funktionsstörung aufweist, oder dass grundsätzlich die Stromversorgung über das Hauptbordnetz nicht gegeben ist. Je nach vorliegendem Fehler kann die Umschaltung der Ventileinheit 7 zum einen über die Steuerungseinrichtung 25 initiiert werden, das heißt, dass die Ventileinheit 7 über die Steuerungseinrichtung 25 angesteuert wird respektive die Bestromung des Stellelements 12 beendet wird, so dass das Federelement 13 den Ventilschieber 11 automatisch zurückdrückt. Bricht zum anderen die Stromversorgung grundsätzlich zusammen, so wird das Stellelement 12 ohnehin nicht mehr mit Strom versorgt, so dass das Federelement 13 automatisch den Ventilschieber 11 in die zweite Position drückt.

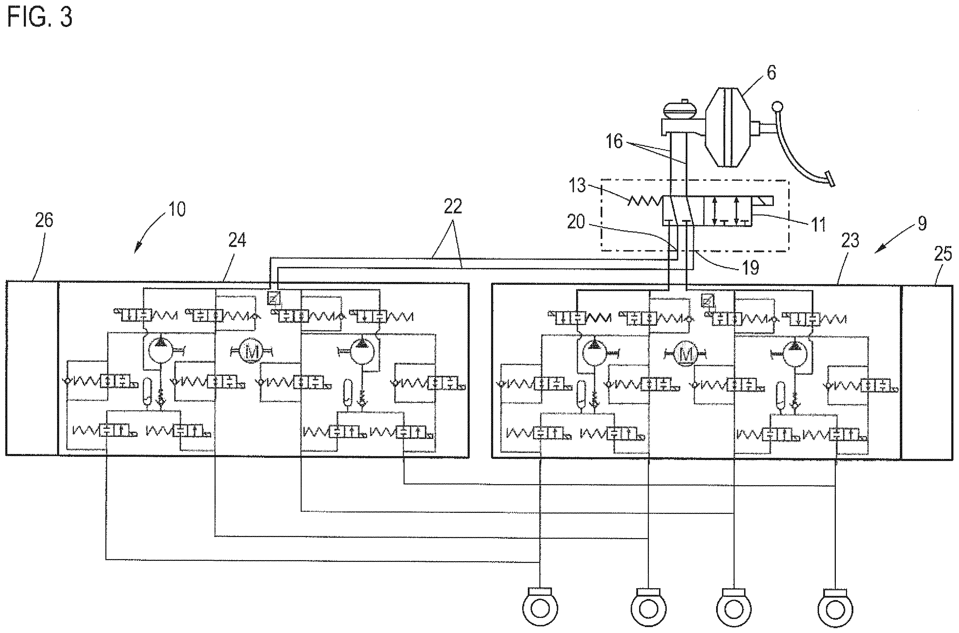

Diese ist exemplarisch in Fig. 3 gezeigt. Ersichtlich befindet sich der Ventilschieber 11 in einer zweiten, nach rechts verschobenen Position, der dritte und vierte Bremskreis ist zugeschaltet. Das Federelement 13 hat ihn, sei es aufgrund einer Ansteuerung über die Steuerungseinrichtung 25, sei es aufgrund fehlender Stromversorgung, in diese Position gedrückt. Ersichtlich sind nunmehr die Leitungen 16 über den Ventilschieber 11 mit den beiden Ausgängen 19, 20, die zu den Leitungen 22 führen, verbunden, so dass die zweite Ventilbaugruppe 24 zugeschaltet ist, während die erste Ventilbaugruppe 23 nicht mehr eingebunden ist. Da die beiden ESC-Blöcke 9, 10 identisch aufgebaut sind, kann über den ESC-Block 10 folglich trotz Umschaltens auf den dritten und vierten Bremskreis die identische Funktionalität hinsichtlich der Brems- und Lenkperformance realisiert werden, wie sie zuvor über den im Regelbetrieb eingebundenen ESC-Block 9 abgebildet wird. Das Fahrzeug kann folglich trotz gegebener Funktionsstörung innerhalb des ersten und/oder zweiten Bremskreises mit der identischen Brems- und Lenkperformance automatisch, also pilotiert weitergeführt werden. Im Umschaltfall erhält der Fahrer natürlich ein entsprechendes Signal, die Fahrzeugführung wieder zu übernehmen, sei es optisch, akustisch oder haptisch. Übernimmt der Fahrer, so ist er wieder vollständig eingebunden, ihm stehen grundsätzlich die üblichen Funktionalitäten des Bremssystems zur Verfügung. Übernimmt der Fahrer jedoch aus welchem Grund auch immer nicht oder sehr zeitverzögert, so ist das Bremssystem trotz allem in der Lage, gesteuert über die Steuerungseinrichtung 26 und die Ventilbaugruppe 24, das Fahrzeug automatisch zu führen, verbunden mit dem Ziel, das Fahrzeug möglichst bald, sofern möglich, in einem sicheren Zustand abzustellen. Diese Funktionalität besitzt das Fahrzeug nach wie vor, da die erfindungsgemäße Bremssystemarchitektur einen "fail operation"-Betrieb ermöglicht.

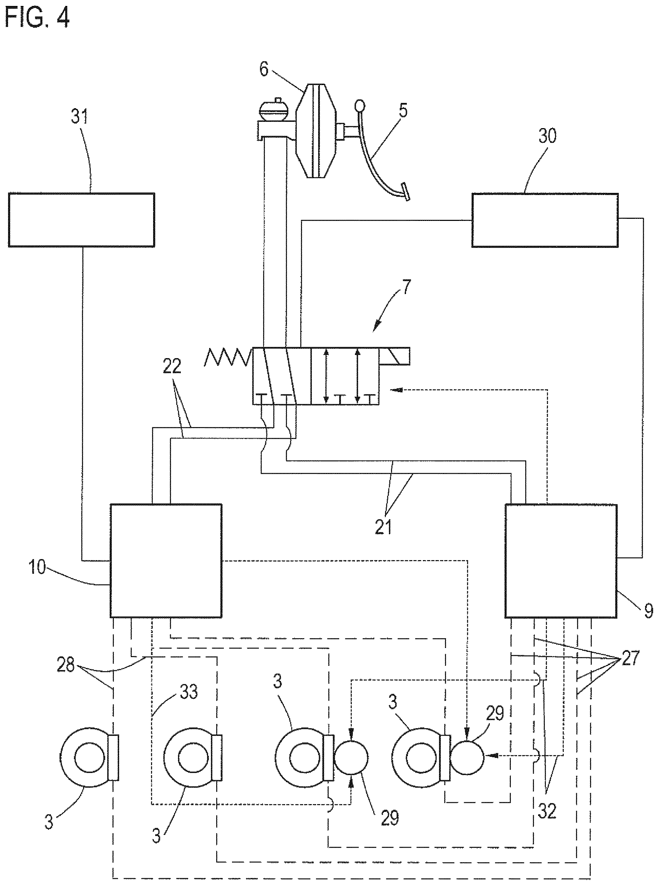

Fig. 4 zeigt eine Prinzipdarstellung, bei welcher an zwei Bremsen 3 eine zusätzliche elektronische Parkbremse realisiert ist. Hierzu ist diesen beiden Bremsen ein Elektromotor 29 zugeordnet. Wie gezeigt, besteht eine grundsätzliche Steuerverbindung zwischen dem ersten ESC-Block 9 und diesen beiden Elektromotoren 29 wie auch zwischen dem zweiten ESC-Block 10 und diesen beiden Elektromotoren. Das heißt, dass je nach Schaltzustand der Ventileinheit 7 entweder der ESC-Block 9 oder der ESC-Block 10 die Ansteuerung der Elektromotoren 9 vornimmt, natürlich über die jeweils integrierte Steuerungseinrichtung 25 bzw. 26. Je nachdem, welcher Bremskreis bzw. ESC-Block 9, 10 nun zugschaltet ist, ist also in jedem Fall eine elektronische Parkbremsansteuerung möglich. Im gezeigten Beispiel ist die Notfallsituation gezeigt, in welcher der ESC-Block 10 zugeschaltet ist.

Exemplarisch sind in Fig. 4 auch zwei separate Strom- oder Bordnetze 30, 31 gezeigt. Das Bordnetz 30 versorgt zum einen - natürlich neben einer Vielzahl anderer Komponenten - den ESC-Block 9 wie auch die Ventileinheit 7. Bricht die Stromversorgung in diesem Bordnetz 30 zusammen oder ist sie instabil, so wird, wie bereits beschrieben, das Stellelement 12 der Ventileinheit 7 nicht weiter bestromt, es kommt zur automatischen Verschiebung des Ventilschiebers 11 in die in Fig. 3 respektive 4 gezeigte Notlaufstellung, in welcher auf den zweiten Bremskreis umgeschaltet wurde.

Der zweite Stromkreis respektive das zweite Bordnetz 31 versorgt - neben einer Vielzahl weiterer Komponenten - nur den zweiten ESC-Block 10, nicht aber die Ventileinheit 7. Diese Bedarf keiner Stromversorgung mehr, vielmehr ist ja über sie sicherzustellen, dass in jedem Fall der zweite Bremskreis zugeschaltet ist.

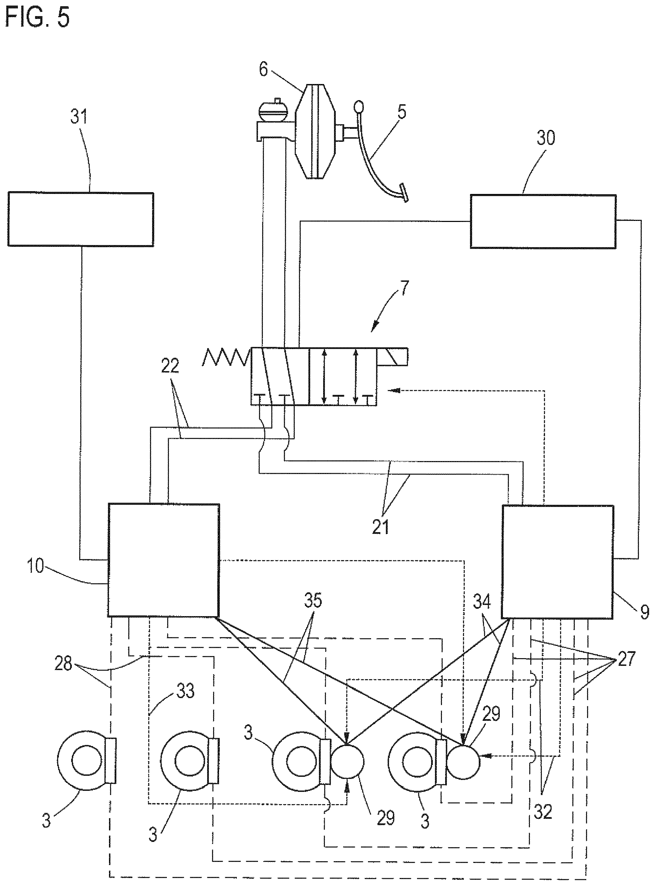

Fig. 5 zeigt schließlich eine Darstellung entsprechend Fig. 4, bei der jedoch zusätzlich zur reinen Ansteuerung der Elektromotoren 29 über entweder den ESC-Block 9 oder den ESC-Block 10 auch die Stromversorgung der beiden Elektromotoren 29 entweder über den ESC-Block 9 oder den ESC-Block 10 erfolgt. Während hier die Ansteuerungsmöglichkeit über die entsprechenden Ansteuerleitungen 32 im Falle des ESC-Blocks 9 respektive 33 im Falle des ESC-Blocks 10 dargestellt ist, ist die Stromversorgung über die entsprechenden Versorgungsleitungen 34 im Falle des ESC-Blocks 9 bzw. 35 im Falle des ESC-Blocks 10 dargestellt. Im vorliegenden Fall - der ebenfalls die Notlaufsituation zeigt - würde die Stromversorgung der Elektromotoren 29 über den ESC-Block 10 erfolgen. Das heißt, dass in diesem Fall nicht nur die Ansteuerung, sondern auch die Stromversorgung der Elektromotoren komplett über den zweiten Bremskreis realisiert ist.

## Patentansprüche

1. Kraftfahrzeug, umfassend mehrere Räder (2) mit jeweils wenigstens einer zugeordneten, hydraulisch betätigbaren Bremse (3), zwei separate hydraulische Bremskreise, über die die Bremsen (3) betätigbar sind, wobei beide Bremskreise über einen gemeinsamen Bremskraftverstärker (6) bedienbar und über eine dem Bremskraftverstärker (6) nachgeschaltete Ventileinheit (7) separat zuschaltbar sind, wobei in beiden Bremskreise eine Ventilbaugruppe (23) mit zugeordneter Steuerungseinrichtung (25) vorgesehen ist, umfassend eine Mehrzahl an separat über die Steuerungseinrichtung (25) steuerbaren Ventilen zur Modulation des Bremsdrucks innerhalb des Bremskreises,
**dadurch gekennzeichnet,**
**dass** parallel zu dem ersten und dem zweiten Bremskreis ein dritter und ein vierter Bremskreis vorgesehen ist, wobei im dritten und vierten Bremskreis eine weitere, identische Ventilbaugruppe (24) mit zugeordneter Steuerungseinrichtung (26) vorgesehen ist, wobei bei einer die Funktionstüchtigkeit des ersten und/oder zweiten Bremskreises beeinträchtigenden erfassten Störung über die elektrisch steuerbare Ventileinheit (7) die Ventilbaugruppe (24) mit Steuerungseinrichtung (26) des dritten und vierten Bremskreises zuschaltbar ist.

2. Kraftfahrzeug nach Anspruch 1,
**dadurch gekennzeichnet,**
**dass** die Ventileinheit (7) ein elektrisch steuerbares Mehrwegeventil ist.

3. Kraftfahrzeug nach Anspruch 2,
**dadurch gekennzeichnet,**
**dass** das Mehrwegeventil ein 6/2-Wegeventil (14) ist.

4. Kraftfahrzeug nach einem der vorangehenden Ansprüche,
**dadurch gekennzeichnet,**
**dass** die Ventileinheit (7) derart in einen die im ersten und zweiten Bremskreis angeordnete Ventilbaugruppe (23) mit Steuerungseinrichtung (25) versorgenden ersten Stromkreis (30) eingebunden ist, dass ein in der Ventileinheit (7) vorgesehenes, über diesen Stromkreis versorgtes elektromagnetisches Stellelement (12) einen Ventilschieber (11) in eine erste, die Ventileinheit (7) zur ersten Ventilbaugruppe (23) öffnende Stellung gegen die Rückstellkraft eines Federelements (13) bewegt, während bei Stromausfall im ersten Stromkreis das Federelement (13) den Ventilschieber (11) automatisch in eine zweite, die Ventileinheit (7) zur zweiten Ventilbaugruppe (24) öffnende Stellung bewegt.

5. Kraftfahrzeug nach einem der vorangehenden Ansprüche,
**dadurch gekennzeichnet,**
**dass** ein oder das in der Ventileinheit (7) vorgesehenes, über den ersten Stromkreis versorgtes elektromagnetisches Stellelement (12) über die Steuerungseinrichtung (25) der ersten Ventilbaugruppe (23) zum Bewegen eines oder des Ventilschiebers (11) von einer ersten, die Ventileinheit (7) zur ersten Ventilbaugruppe (23) öffnende Stellung in eine zweite, die Ventileinheit (7) zur zweiten Ventilbaugruppe (24) öffnende Stellung ansteuerbar ist.

6. Kraftfahrzeug nach einem der vorangehenden Ansprüche,
**dadurch gekennzeichnet,**
**dass** wenigstens zwei der Bremsen (3) mit diese betätigenden, bei Bedarf elektrisch ansteuerbaren Elektromotoren (29) versehen sind, wobei die Elektromotoren (29) über die jeweils betriebene Steuerungseinrichtung (25, 26) der jeweiligen, über die Ventileinheit (7) zugeschalteten Ventilbaugruppe (23, 24) ansteuerbar sind.

7. Kraftfahrzeug nach Anspruch 6,
**dadurch gekennzeichnet,**
**dass** die Elektromotoren (29) über die jeweilige Ventilbaugruppe (23, 24) oder die jeweilige Steuerungseinrichtung (25, 26) auch bestromt werden.

## Claims

1. Motor vehicle, including several wheels (2) that each have at least one corresponding hydraulic brake (3), two separate hydraulic brake circuits by which the brakes (3) can be operated, whereby both brake circuits can be operated by a joint brake booster (6) and can be separately connected to a brake booster (6) by a downstream valve unit (7), whereby in both brake circuits a valve assembly (23) is provided with an associated control system (25) including a plurality of valves that can be controlled separately by the control system (25) for modulating the brake pressure within the brake circuit,
**characterised in that**
a third and fourth brake circuit is included parallel to the first and second brake circuit, whereby an additional, identical valve assembly (24) with a corresponding control system (26) is included in the third and fourth brake circuit, whereby in the case of a detected malfunction adversely affecting the functionality of the first and/or second brake circuit the valve assembly (24) can be connected with the control system (26) of the third and fourth brake circuit via the electrically controllable valve unit (7).

2. Motor vehicle according to Claim 1,
**characterised in that**
the valve unit (7) is a selector valve that can be controlled electronically.

3. Motor vehicle according to Claim 2,
**characterised in that**
the selector valve is a 6/2 directional control valve (14).

4. Motor vehicle according to any one of the preceding claims,
**characterised in that**
the valve unit (7) is integrated in a first power circuit (30) supplying the valve assembly (23) arranged in the first and second brake circuits with a control system (25) in such a way that an electromagnetic actuator (12) included in the valve unit (7) provided by this power circuit moves a spool valve (11) into a first position which opens the valve unit (7) in the first valve assembly (23) against the restoring force of a suspension element (13), while in case of a power failure in the first power circuit, the suspension element (13) automatically moves the spool valve (11) into a second position which opens the valve unit (7) in the second valve assembly (24).

5. Motor vehicle according to any one of the preceding claims,
**characterised in that**
an or the electromagnetic actuator (12) included in the valve unit (7) provided by the first power circuit can be controlled by the control system (25) of the first valve assembly (23) for moving a or the spool valve (11) from a first position which opens the valve unit (7) in the first valve assembly (23) into a second position which opens the valve unit (7) in the second valve assembly (24).

6. Motor vehicle according to any one of the preceding claims,
**characterised in that**
at least two of the brakes (3) are furnished with these electric motors (29) that, if needed, can be controlled electronically, whereby the electric motors (29) can be controlled by each active control system (25, 26) of each valve assembly (23, 24) connected by the valve unit (7).

7. Motor vehicle according to Claim 6,
**characterised in that**
the electric motors (29) are also supplied with current by each valve assembly (23, 24) or each control system (25, 26).

## Revendications

1. Véhicule automobile, comprenant plusieurs roues (2) avec à chaque fois au moins un frein (3) associé, à actionnement hydraulique, et deux circuits de freinage hydrauliques séparés par l'intermédiaire desquels les freins (3) sont actionnables, les deux circuits de freinage étant commandables par l'intermédiaire d'un servofrein (6) commun et pouvant être raccordés séparément par l'intermédiaire d'une unité à soupapes (7) branchée en aval du servofrein (6), un module de soupapes (23) avec dispositif de commande (25) associé étant prévu dans les deux circuits de freinage, lequel comprend une multiplicité de soupapes commandables séparément par l'intermédiaire du dispositif de commande (25) pour la modulation de la pression de freinage à l'intérieur du circuit de freinage,
**caractérisé en ce qu'**il est prévu un troisième et un quatrième circuit de freinage parallèlement au premier et au deuxième circuit de freinage, un autre module de soupapes (24) identique avec dispositif de commande (26) associé étant prévu dans le troisième et le quatrième circuit de freinage, le module de soupapes (24) avec dispositif de commande (26) du troisième et du quatrième circuit de freinage pouvant être raccordé par l'intermédiaire de l'unité à soupapes (7) commandable électriquement lors de la détection d'une perturbation influençant négativement la capacité à fonctionner du premier et/ou du deuxième circuit de freinage.

2. Véhicule automobile selon la revendication 1, **caractérisé en ce que** l'unité à soupapes (7) est un distributeur commandable électriquement.

3. Véhicule automobile selon la revendication 2, **caractérisé en ce que** le distributeur est un distributeur 6/2 (14).

4. Véhicule automobile selon l'une des revendications précédentes, **caractérisé en ce que** l'unité à soupapes (7) est intégrée de telle sorte dans un premier circuit de courant (30) alimentant un module de soupapes (23) avec dispositif de commande (25) qui est agencé dans le premier et le deuxième circuit de freinage qu'un premier élément de réglage électromagnétique (12) prévu dans l'unité à soupapes (7) et alimenté par l'intermédiaire de ce circuit de courant déplace un tiroir de soupape (11) dans une première position ouvrant l'unité à soupapes (7) vers le premier module de soupapes (23) contre la force de rappel d'un élément ressort (13) tandis que, en cas de panne de courant dans le premier circuit de courant, l'élément ressort (13) déplace automatiquement le tiroir de soupape (11) dans une deuxième position ouvrant l'unité à soupapes (7) vers le deuxième module de soupapes (24).

5. Véhicule automobile selon l'une des revendications précédentes, **caractérisé en ce qu'**un élément de réglage ou l'élément de réglage (12) électromagnétique prévu dans l'unité à soupapes (7) et alimenté par l'intermédiaire du premier circuit de courant peut être commandé par l'intermédiaire du dispositif de commande (25) du premier module de soupapes (23) pour déplacer un ou le tiroir de soupape (11) d'une première position ouvrant l'unité à soupapes (7) vers le premier module de soupapes (23) à une deuxième position ouvrant l'unité à soupapes (7) vers le deuxième module de soupapes (24).

6. Véhicule automobile selon l'une des revendications précédentes, **caractérisé en ce qu'**au moins deux des freins (3) sont munis de moteurs électriques (29) actionnant lesdits freins et pouvant être commandés électriquement lorsque c'est nécessaire, les moteurs électriques (29) pouvant être commandés par l'intermédiaire du dispositif de commande (25, 26), respectivement en fonctionnement, du module de soupapes (23, 24) respectif raccordé par l'intermédiaire de l'unité à soupapes (7).

7. Véhicule automobile selon la revendication 6, **caractérisé en ce que** les moteurs électriques (29) sont aussi alimentés en courant par l'intermédiaire du module de soupapes (23, 24) respectif ou du dispositif de commande (25, 26) respectif.
